# EUROPEAN PATENT APPLICATION

(11) **EP 0 554 075 A2**
(43) Date of publication of application: **04.08.1993**
(21) Application number: 93300592.8
(22) Date of filing: 27.01.1993
(51) Int. Cl.: H04N 7/00, H04N 5/16

(54) **Signal tracking**

(30) Priority: 29.01.1992 GB 9201870
(71) Applicant: PLESSEY SEMICONDUCTORS LIMITED, Swindon, Wiltshire SN2 2QW (GB)
(72) Inventor: Sitch, Douglas Robert, Plympton, Plymouth, Devon PL7 3YW (GB)
(74) Representative: Hoste, Colin Francis

(57) **Abstract**

An arrangement for tracking the black level reference of a received video signal waveform comprises a capacitive storage means on which a voltage representing the reference may be established, a comparator to one input of which the signal waveform is applied and to the other input of which the voltage representing the reference is applied, and two current sources to charge and discharge the capacitive storage means respectively in dependence on the output of the comparator, the current sources providing currents of values in a ratio dependent upon the distribution of the received waveform above and below the black level reference.

## Description

This invention relates to an arangement of tracking a reference level of transmitted signals in order to provide means for the accurate extraction of the signal content.

Certain complex waveforms, which are used for example in transmitting video signals with a teletext content, also include synchronization signals, successive waveforms representing either successive lines of teletext information or successive lines of a television picture. Typically the video signal line may be of 64uS duration and may include a synchronization pulse which is negative-going with respect to a reference level, the black level, and a picture signal which is positive-going with respect to that reference level. The synchronization pulse and the picture signal will be allocated a particular time interval within the duration of the video signal itself and will be separated from each other and from the previous or following line by periods at the black level reference voltage. The video signals are usually a.c. coupled, so that the levels may float. The synchronization signal has to be extracted from the complex signal and it is necessary for it to be resistant to interference and adaptable to variations in reference level and signal amplitude. It is an object of the present invention to provide an improved method of tracking the reference levels in a complex composite signal waveform in order to extract a synchronization signal therefrom.

According to one aspect of the present invention an arrangement for tracking a reference level of a generally periodic signal waveform for an interval in each period of which the instantaneous value of the waveform is substantially at said reference level, comprises capacitor storage means on which a voltage representing said reference level may be established, a comparator to one input of which is arranged to be applied said signal waveform and to the other input of which is arranged to be applied the voltage representing said reference level, and first and second current sources operable in dependence upon the output of said comparator to charge or discharge respectively said capacitance storage means, the currents supplied by said sources being in a predetermined ratio other than unity.

According to another aspect of the present invention an arrangement for tracking a reference level of a generally periodic signal waveform in at least some periods of which the waveform includes a first interval in which the instantaneous value thereof is negative with respect to said reference level and a second interval in which the instantaneous value thereof is positive with respect to said reference level, comprises capacitive storage means on which a voltage representing said reference level may be established, a comparator to one input of which is arranged to be applied said signal waveform and to the other input of which is arranged to be applied the voltage representing said reference level, and first and second current sources operable in dependence upon the output of said comparator to charge or discharge respectively said capacitive storage means, the currents supplied by said sources being in a predetermined ratio other than unity.

Preferably said ratio is dependent upon the comparative lengths of said first and second intervals.

In order that the invention may be readily understood detector circuits in accordance therewith will now be described with reference to the five figures of the accompanying drawings.
In the drawings:
Figure 1 represents a typical signal waveform having a reference level to be tracked;
Figure 2 is a simplified version of a circuit with a ratio device which can constitute a black level detector, and
Figure 3 to 5 show circuits including both black level detectors and synchronization peak level detectors.

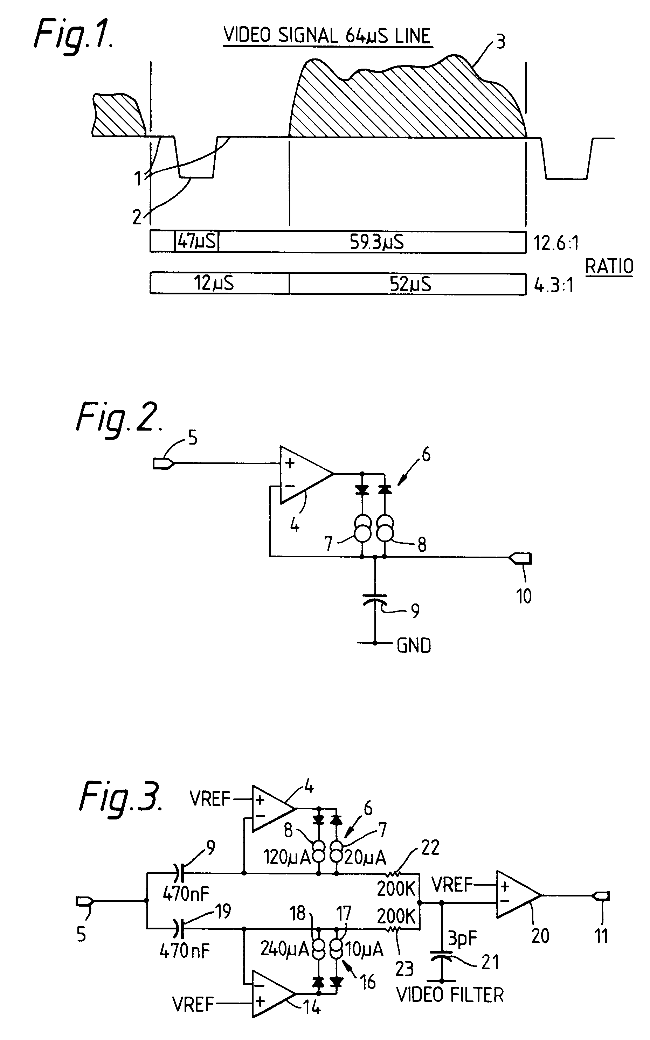

Referring first to Figure 1 this shows a waveform of which the reference black level is to be tracked. The waveform has a black level 1 which is the primary reference level and which may float, a negative-going synchronization pulse 2, and a positive-going complex picture signal pulse 3. In Figure 1 a single complete line video signal is shown with just the end of the previous line and the beginning of the next line. Each line has a duration of 64 uS and it will be seen from the ratio diagram at the foot of Figure 1 that the period of the synchronization pulse is 4.7 uS leaving a period of 59.3 uS for the rest of the signal. This works out in a ratio of 12.6:1. However the period of the signal which is at the black level or below is 12 uS which compares with the picture signal content 3 of 52 uS. The ratio of picture signal interval to the rest of the line is therefore 4.3:1. This ratio is important when considering the circuit components.

The video waveform is A.C. coupled, it is of unknown amplitude and the D.C. voltage offsets are also unknown. In order to extract the synchronization pulses both the black level and the synchronization level of the incoming signal has to be tracked. A suitable basic circuit for tracking the black level is shown in Figure 2 and this comprises a comparator 4 connected to a video input terminal 5 and having a tracking circuit indicated generally at 6. The circuit comprises two arms, 7 and 8 respectively which constitute current sources in the ratio of 1 to 6 respectively. The output from the circuit 6 is connected to one terminal of a capacitor 9, the other terminal of which is earthed, and also to the black level terminal output 10. The voltage developed across the storage capacitor 9 is fed to a second terminal of the comparator 4. In operation the video signal is fed to terminal 5 and to the comparator 4 and the circuit 6 provides a charging or discharging output current in a predetermined ratio to the capacitor 9. The voltage across this capacitor is then compared in comparator 4 with the incoming signal and its output varies the voltage of the capacitor up or down as necessary. With the voltage of the capacitor 9 below the black level 1 of the signal (figure 1) the comparator 4 will have a mark-space ratio of about 1:12 due to slicing of the synchronization pulses. The net average current output from the driver will pull the capacitor voltage up higher towards the black level. If the capacitor voltage is above the black level the output of comparator 4 will have a mark-space ratio of between 1:4 and fully on. This is dependent on the picture content in the element 3 of the signal. The net average current output from circuit 6 will then pull the capacitor voltage down towards the black level. On the assumption that the value of the capacitor 9 and the driver current levels are such that the time constants average output line by line variations the voltage of capacitor 9 will stabilize on the black level of the video signal and proceed to track it continuously.

If reference is now made to Figure 3 this indicates a further circuit incorporating the black level detector of Figure 2 and the synchronization pulse peak detector which are inter-coupled. In the sync peak detector power of the circuit there is provided a comparator 14 having a driver circuit 16 in which current sources 17, 18 are ratioed in the proportion 1:24 and are connected to a storage capacitor 19 which is also connected to the second input of the comparator 14. A reference voltage is fed to the positive terminals of both comparators 4 and 14. This reference voltage is also connected to an output comparator 20 which on its negative terminal is connected to a capacitor 21 and to the junction between two resistors 22, 23 which constitute a potential divider. The output from the comparator 20 is connected to a terminal 11 from which the sliced synchronize output is obtained. The operation of the synchronization pulse level detector is basically the same as that described for the black level detector. The circuit 16 gives its ratioed output to drive the capacitor 19 up or down and this effects the comparator 14 in its output. The circuit is immune to the level of the video signal at the input 5 and whatever the amplitude it should be resistant to any interference.

The application of a simple voltage divider 22, 23 to provide a voltage mid-way between the black level reference and synchronisation level reference tracking circuits allows for the slicing and extraction of the synchronisation pulse timing to the output 11 by means of a comparator or similar, when compared to the incoming video signal.

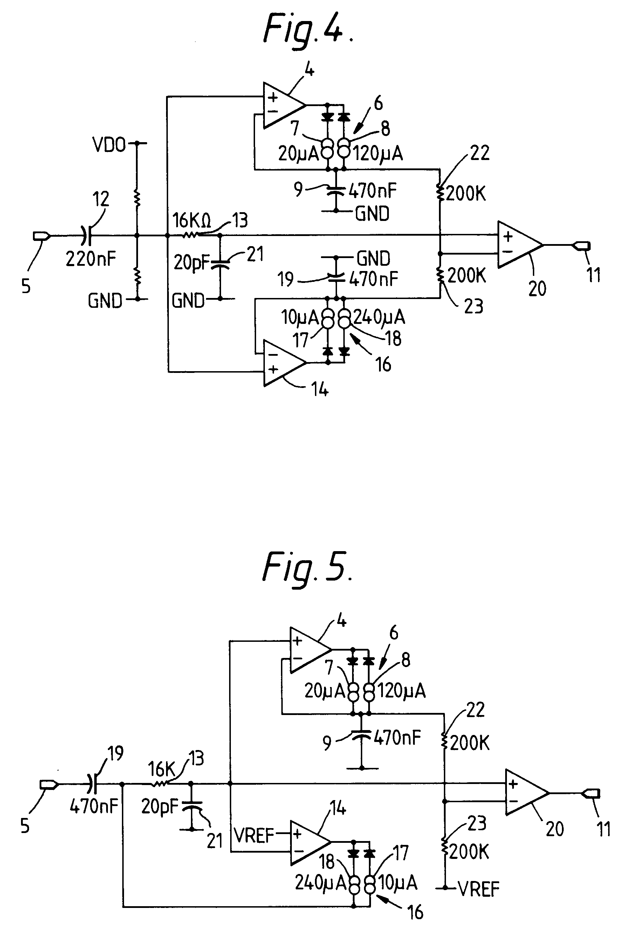

Figure 4 shows variation of the circuit of Figure 3. In this the input to the comparator 20 is connected directly to the video input signal on terminal 5 to a capacitor 12 and a video filter resistor 13. This causes the video signal to be offset with respect to a reference signal or to earth. Otherwise the operation is substantially as described above. A further variation of the circuit is shown in Figure 5 where the synchronization peak detector is shown as input coupled.

By using the method of the invention the set ratio of currents against the mark-space ratio from output from the comparator will locate an equilibrium voltage from the incoming signal and there is very little risk of any interference being established.

## Claims

1. An arrangement for tracking a reference level of a generally periodic signal waveform for an interval in each period of which the instantaneous value of the waveform is substantially as said reference level, comprising capacitor storage means on which a voltage representing said reference level may be established, a comparator to one input of which is arranged to be applied said signal waveform and to the other input of which is arranged to be applied the voltage representing said reference level, and first and second current sources operable in dependence upon the output of said comparator to charge or discharge respectively said capacitance storage means, the currents supplied by said sources being in a perdetermined ratio other than unity.

2. An arrangement for tracking a reference level of a generally periodic signal waveform in at least some periods of which the waveform includes a first interval in which the instantaneous value thereof is negative with respect to said reference level and a second interval in which the instantaneous value thereof is positive with respect to said reference level, comprising capacitive storage means on which a voltage representing said reference level may be established, a comparator to one input of which is arranged to be applied said signal waveform and to the other input of which is level, and first and second current sources operable in dependence upon the output of said comparator to charge or discharge respectively said capacitive storage means, the currents supplied by said sources being in a predetermined ratio other than unity.

3. An arrangement in accordance with Claim 2 wherein said ratio is dependent upon the relative lengths of said first and second intervals.

4. An arrangement in accordance with Claim 2 wherein the first interval is occupied by a synchronisation pulse and the second interval is occupied generally by picture information, the two intervals being in a ratio of the order of 1 : 12, the ratio of the charging current to discharging current from the respective sources being in a ratio closer to 1 : 1.

5. An arrangement in accordance with Claim 4 wherein the ratio of charging current to discharging current is 1 : 6.
